# EUROPEAN PATENT APPLICATION

(11) **EP 3 834 672 A1**
(43) Date of publication of application: **16.06.2021**
(21) Application number: 20211997.0
(22) Date of filing: 04.12.2020
(51) Int. Cl.: A47F 3/02, A23G 9/22, A47F 3/04

(54) **REFRIGERATED COUNTER FOR ICE CREAM TUBS WITH VARIABLE VOLUME**

(30) Priority: 10.12.2019 IT 201900023538
(71) Applicant: INDUSTRIE SCAFFALATURE ARREDAMENTI - ISA SOCIETÀ PER AZIONI, 06083 Bastia Umbra (PG) (IT)
(72) Inventor: GIULIETTI, Marco, 06083 Bastia Umbra (PG) (IT)
(74) Representative: Baldi, Claudio

(57) **Abstract**

A refrigerated counter for ice cream tubs, wherein each one of said tubs is provided with a dish suitable for being gradually raised towards the opening of the tub; wherein said dish is suitable for maintaining the ice cream loaded in the tub always in the proximity of the opening, even in case of a progressive level reduction suffered by said ice cream in view of the ordinary distribution to customers.

## Description

The present patent application for industrial invention relates to a refrigerated counter for ice cream tubs with variable volume.

Refrigerated counters suitable for containing tubs used to store and serve ice cream - the most popular ones being buckets with a cylindrical shape - have been known for long.

Normally, said tubs are inserted into corresponding seats obtained in the refrigerated counter, it being provided that the openings that provide access to said tubs and to the ice cream are disposed flush with the counter and are provided with lids.

In view of the above, the operator in charge of serving the ice cream removes the lids of the tubs with the different ice cream flavors, gets the ice cream out of the tubs and prepares the ice cream cups or cones for the customers with the available flavors.

Such a consolidated technology is impaired by a severe drawback that is related to the fact that the tubs have a depth of approximately 25 cm.

Each tub is loaded with a considerable quantity of ice cream in such a way to fill the tub from the bottom to the upper opening.

If such an initial operating condition is maintained, the tubs do not cause any problems, being especially appreciated for two aspects.

Firstly, when the operator has removed the lid of the tubs, the customer can see the contents of the tubs, immediately seeing the color and the creaminess of the ice cream contained in the tubs.

Such a fact is extremely advantageous because it arouses the desire of the customer for the ice cream; for this reason, the lids of the tubs are often made of glass or of a transparent plastic material.

The second advantage given by a full (or almost full) ice cream tub is related to the fact that the operator can easily reach the ice cream inside the tub, without having to "dive" with the arm that holds the spatula into the tub because the level of the ice cream loaded in the tub is disposed in the proximity of the upper opening.

Vice versa, the two afore-mentioned advantages progressively disappear when the operator keeps on getting the ice cream out of the tub, gradually reducing the quantity of available ice cream.

As a matter of fact, when the ice cream level inside a tub gets lower and lower, it becomes more and more difficult for an external observer to see the color and the quality of the ice cream (even if the tub has a transparent lid); on the other hand, the operator is forced to dive with his/her arm into the tub in order to get the ice cream out of the tub.

After examining the two afore-mentioned problems closely, a new refrigerated counter for ice cream tubs has been disclosed, with the main purpose of guaranteeing that the level of the ice cream loaded in each tub is constantly maintained slightly under the opening of the tub, in spite of the progressive reduction of the ice cream caused by the fact that the operator continues on serving the customers.

The inventive idea that allows to achieve such a purpose consists in providing the bottom of each ice cream tub, in spite of its cylindrical or parallelepiped shape, with a dish that occupies the entire horizontal section and is capable of rising progressively inside the tub under the action of an actuator housed in the base of the refrigerated counter.

In view of the above, the dish of the ice cream tub becomes the surface that supports the ice cream loaded in the tub, and the progressive rising of said dish - which is performed while the operator gets the ice cream out of the tub - has the desired effect of constantly maintaining the ice cream in the proximity of the opening that provides access to the tub of the refrigerated counter.

In this way, the ice cream contained in each tub is always visible to the customer.

At the same time, the operator can get the ice cream out of each tub comfortably in order to prepare ice cream cups and cones.

For the sake of clarity, the description of the invention continues with reference to the attached drawings, which have a merely illustrative, not limiting value, wherein:
- Fig. 1 is an axonometric view of the new refrigerated counter for ice cream tubs;
- Figs. 2 and 3 are sectional views of Fig. 1 with the plane A-A, which show one of said ice cream tubs of the refrigerated counter together with its actuation stem, in two different operating conditions of the actuation stem;
- Fig. 3A is an enlarged view of Fig. 3;

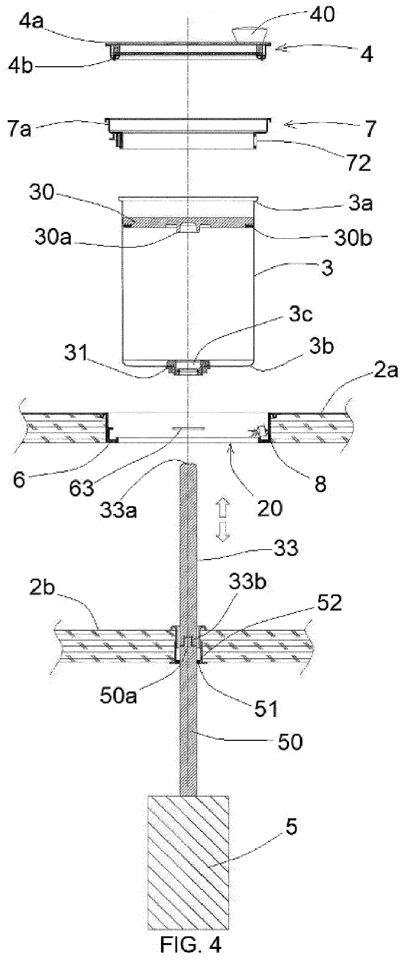

- Fig. 4 is the same view as the two preceding figures, except for the fact that it shows the different parts that cooperate with each ice cream tub of the refrigerated counter according to the invention in an exploded view;
- Fig. 5 is an axonometric view - with an enlarged detail - of a tub inserted and fixed inside the hole on the refrigerated counter, partially sectioned with a vertical plane in correspondence of the means for the rapid fixing of the tub to the refrigerated counter;
- Fig. 6 is the same as Fig. 5, wherein the ring of the tub is shown in an exploded view, with a partially enlarged view of the main drawing;
- Fig. 7 is the same as Fig. 3, except for the fact that it refers to an additional embodiment of the refrigerated counter of the invention, with the provision of the sensors suitable for detecting the presence of ice cream inside each tub;
- Figs. 8A, 8B, and 8C, together with the enlarged details, refer to an alternative embodiment of the new refrigerated counter of the invention that is suitable for housing rectangular tubs.

With reference to the aforementioned figures, the refrigerated counter of the invention (B) is normally provided with a base (1) that contains the refrigeration unit and supports a body (2), preferably with parallelepiped shape, wherein the refrigerated compartment suitable for housing a plurality of tubs (3) in vertical direction is mounted.

Said body (2) is closed on top by a horizontal upper wall, which is the worktop (2a) of the refrigerated counter, (B) and is closed on the bottom by a horizontal bottom wall (2b), said worktop (2a) and said horizontal bottom wall (2b) being suitably joined by insulated vertical walls.

Said worktop (2a) of the body (2) is provided with a plurality of holes (20) wherein the tubs (3) are exactly inserted from up down.

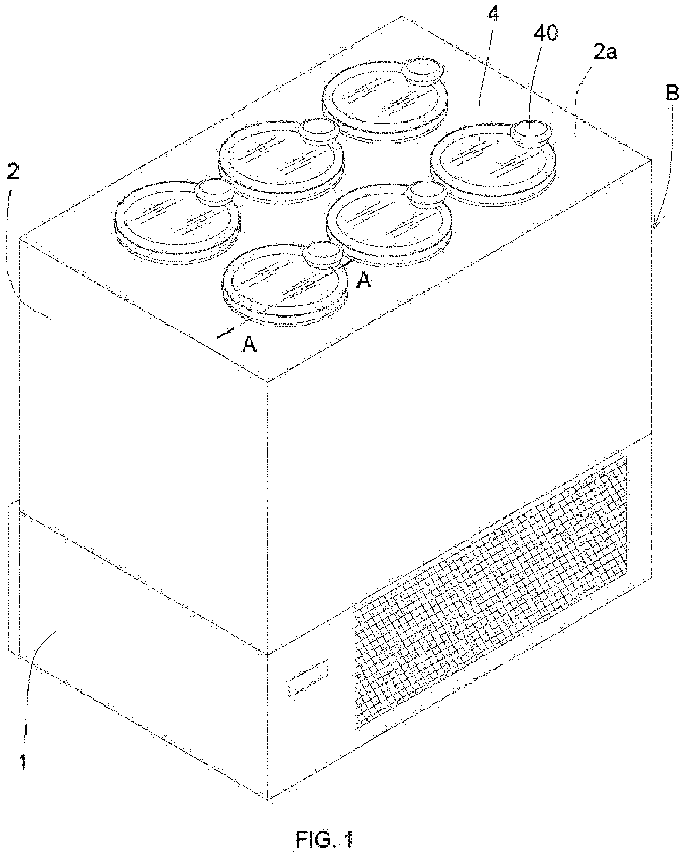

With reference to Fig. 1, the refrigerated counter of the invention (B) is provided with cylindrical tubs (i.e. buckets) and therefore each hole (20) of the worktop (2a) has a circular profile.

Regardless of its specific shape, each tub (3) has a tubular structure that extends from the bottom wall (3b) to the upper opening (3a).

In particular, as shown in the appended figures, the upper opening (3a) of each tub (3) is flush with the lower edge of the worktop (2a) of the body (2), whereas the bottom wall (3b) is disposed at a short distance from the horizontal bottom wall (2b) of the body (2).

Moreover, each tub (3) is usually provided with a removable lid (4).

Within such a traditional configuration, the new refrigerated counter of the invention (B) is characterized by several innovative features.

Firstly, it must be noted that each tub (3) exactly houses a dish (30) that entirely occupies the transverse section of the tub (3) and is capable of alternatively sliding from a lower end-of-travel position, in the proximity of said bottom wall (3b) of the tub, to an upper end-of-travel position, immediately below the opening (3a) of the tub (3).

An annular collar (30a) projects in the center of the lower surface of said dish (30). When the dish (30) is disposed in the proximity of the bottom wall (3b) of the tub (3), the annular collar (30a) can be exactly inserted in a hole (3c) disposed in the center of said bottom wall (3b) of the tub and provided with a bushing (31).

In order to provide for the alternate sliding of the dish (30) of each tub (3), the annular collar (30a) exactly and firmly houses the upper end (33a), which is preferably provided with a conical shape, of a stem with vertical axis (33), capable of operating as a plunger with respect to the dish (30); it being provided that the alternate travels of said stem (33) are suitably guided by said bushing (31) mounted in correspondence of the hole (3c) provided on the bottom wall (3b) of the tub (3).

Moreover, it must be noted that the dish (30) is preferably provided with a perimeter seal (30b) suitable for providing a seal against the internal lateral walls of the tub (3) during the alternate travels of the dish (30).

In order to provide for the alternate sliding of the dish (30) of the tubs (3), the refrigerated counter of the invention (B) is provided with an actuator (5), preferably a jack, inside the base (1) under the place occupied by each tub (3) in the body (2), said actuator (5) being provided with a stem with vertical axis (50) capable of making alternate travels in vertical direction.

In particular, said stem (50) is suitable for alternately going from a retracted position, wherein it is completely disposed inside said base (1), to an extended position, wherein the tip (50a) is inserted in a hole with vertical axis (51) that crosses said bottom wall (2) of the body (2) and is provided with a hermetic bushing (52).

The tip (50a) of said stem (50) is suitable for being exactly coupled with a corresponding housing obtained in the lower end (33b) of the stem (33) that cooperates with the dish (30) of each tub (3).

In view of the above, the stem (50) determines the alternate travels of said stem (33) inside said hole (51) on the bottom wall (2b) of the body (2) and, more precisely, inside the bushing (52) that acts as sliding guide.

Therefore, during the alternate travels in vertical direction, because of the interposition of the stem (33), the stem (50) enables the alternate travels of said dish (30) of a tub (3).

Moreover, it must be noted that the fact that each stem (50) of the actuators (5) cooperates with stems (33) is a merely constructive solution that has been devised in order to reduce the volumes and facilitate the assembling and the operation of the various parts of the refrigerated counter of the invention (B).

As a matter of fact, instead of cooperating with a stem (33), each one of said stems (50) may have a suitable length to entirely cross said hole (51) until the tip (50a) is inserted in the bottom wall (3b) of a tub (3) and until the tip (50a) is firmly inserted in the annular collar (30a) of the dish (30) of the tub (3).

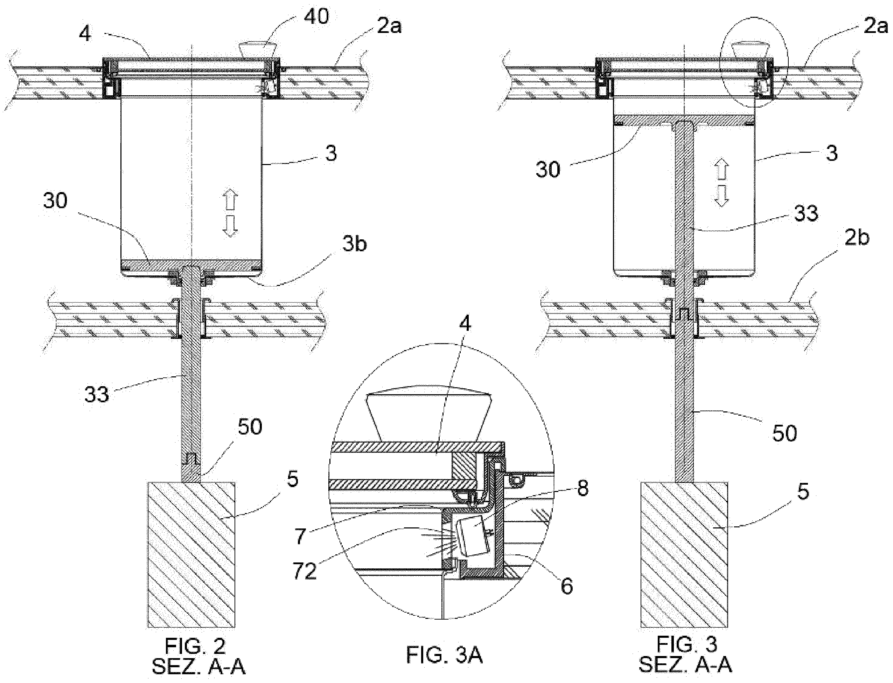

Figs. 2 and 3 show the different operating conditions of said stem (50).

In particular, Fig. 2 shows the stem (50) in retracted condition, wherein the dish (30) of the tub (3) is disposed on the bottom of the tub (3), whereas the stem (33) associated with said dish (30) is almost entirely housed in the base (1) of the refrigerated counter of the invention (B), outside the tub (3).

Evidently, such a first operating condition of the afore-mentioned parts is maintained until the tub (3) is filled with ice cream, substantially for its entire height.

When the ice cream level is reduced because of the fact that the operator is using the ice cream, the stem (50) favors the progressive rising of said dish (30) inside the tub (3), bringing the ice cream that is still contained on the dish (30) closer to the opening of the tub (3).

Fig. 3 shows the stem (50) in extended condition, wherein the dish (30) of the tub (3) is brought closer to the opening (3a) of the tub (3), whereas the stem (33) associated with said dish (30) is deeply inserted in the tub (3), from the bottom upwards.

It must be noted that the stem (50), together with the stem (33), is suitable for being in said retracted position of Fig. 2 also during the insertion of the tub (3) through the hole (20) provided on the worktop (2a) of the refrigerated counter of the invention (B), in order to avoid hindering the insertion of the tub (3).

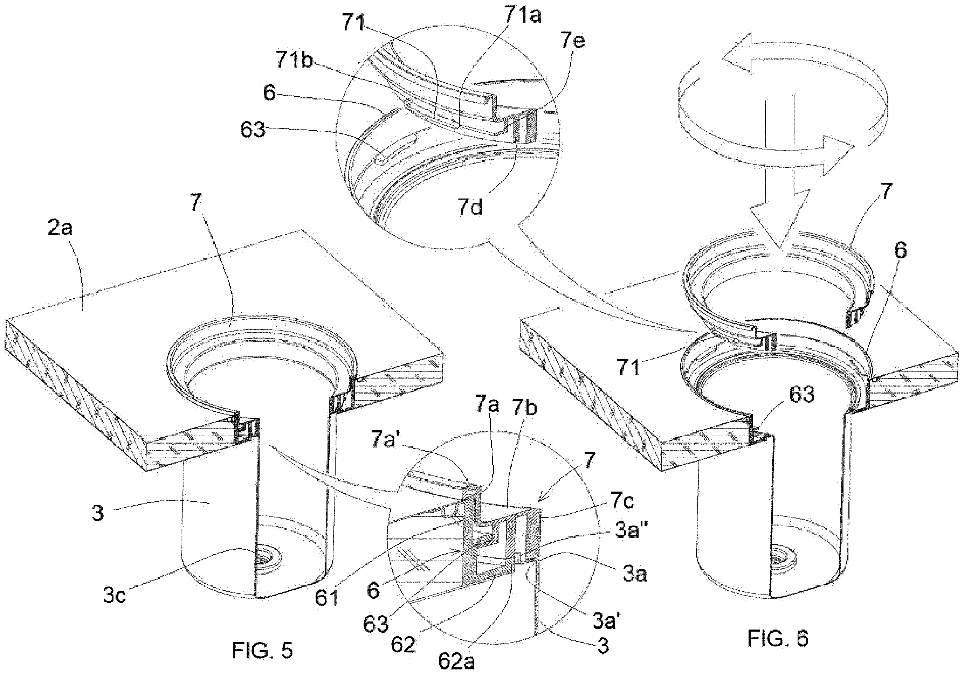

With reference to Figs. 5 and 6, after being inserted in the hole (20), each one of said tubs (3) is fixed in position by means of suitable stop means (6, 7) provided in the worktop (2a) of the body (2) of the refrigerated counter of the invention (B).

Figs. 5 and 6 show an embodiment of the present invention wherein the refrigerated counter of the invention (B) is provided with tubs (3) having a cylindrical shape.

The tubs (3) are firmly fixed in the worktop (2a) of the body (2) in order to prevent each tub (3) from accidentally coming out of the hole (20) because of the action exerted on the dish (30) of the tub (3) from the bottom upwards by said stem (50).

As a matter of fact, such a rising travel of the entire tub (3) may occur because of the inevitable friction exerted by the dish (30) during the rising travel against the internal walls of the tub (3), integrally transferring the movement of the dish (30) to the tub (3).

This description continues by illustrating the configuration and the operation mode of said stop means (6, 7) of each tub (3) with cylindrical shape.

A collar, which is hereinafter defined as a counter-ring (6), is inserted and firmly held inside each hole (20) of the tubs (3).

With reference to the enlarged view of Figs. 5, when sectioned with a vertical transverse plane, said counter-ring (6) is basically shaped like an "L", it being formed of a substantially vertical annular wall (61) joined at the base with a horizontal wall (62) directed towards the center of said counter-ring (6), which in turns ends with a thickened edge (62a).

Three elongated shelves (62) with horizontal direction are provided in said vertical wall (61) of said counter-ring (6) and regularly spaced by 120°.

After being disposed on the worktop (2a), a similar counter-ring (6) is suitable for acting as fixing means for a removable ring, which is hereinafter defined as ring (7); said ring (7) is suitable for holding the tub (3) in position after inserting the tub (3) in a hole (20) of the worktop (2a) provided with counter-ring (6).

In view of the above, the opening (3a) of the tub (3) is provided with a horizontal edge (3a') that is folded outwards at 90°, which supports an annular edge (3a") at its end.

When a tub (3) is inserted in the hole (20), the annular edge (3a") is exactly interfaced with said thickened edge (62a) provided at the end of said horizontal wall (62) of the counter-ring (6).

When seen in a sectional view, the ring (7) has a substantially S-shaped profile that comprises a vertical annular wall (7a) joined at the base, by means of a horizontal shoulder (7b), to a first annular edge (7c) with downward direction, in parallel position to said vertical annular wall (7a), but in forward position with respect to the center of the ring (7).

Said vertical annular wall (7a), which is practically the opening of said ring (7), is provided on top with a box perimeter edge (7a') directed outwards and folded downwards.

The shoulder (7b) of the ring (7) is provided with a second annular edge (7d) in lower position, said second annular edge (7d) being concentric and disposed in more internal position with respect to the first annular edge (7c) of the ring (7).

Said shoulder (7b) is also provided in lower position with a third annular edge (7e) with lower height, disposed in more external position with respect to the second annular edge (7d); three elongated counter-shelves (71) with horizontal direction project from said third annular edge (7e), being regularly spaced by 120°.

Each counter-shelf (71) is provided with a wedge profile (71a) in its first end, and with a projection (71b) with vertical direction in its second end.

The insertion of said ring (7) in the counter-ring (6) determines the following conditions:
- the box perimeter edge (7a') of the ring (7) is engaged from above against said vertical annular wall (61) of the counter-ring (6)
- the external surface of said vertical annular wall (7a) of the ring (7) is engaged against the internal side of said vertical annular wall (61) of the counter-ring (6), at a higher height than the horizontal teeth (63)
- the second annular edge (7d) that protrudes under said shoulder (7b) of the ring (7) is engaged above said thickened edge (62a) of said horizontal annular wall (62) of the counter-ring (6)
- said third annular wall (7c) of the ring (7) is engaged above said perimeter edge (3a') from where the annular edge (3a") protrudes upwards, all around the opening (3a) of the tub (3).

During such a coupling between the ring (7) and the counter-ring (6), the horizontal counter-shelves (71) of the ring (7) are disposed at an immediately lower height than the height of the horizontal shelves (63) in the counter-ring (6).

In order to finally fix the ring (7) to the counter-ring (6), it is simply necessary to rotate the ring (7) shortly, in such a way that the counter-shelves (71) are exactly inserted under the shelves (63) of the counter-ring (6) from the wedge-like end (71a) to the end-of-travel position represented by said projections (71b).

Evidently, such a close interference between the shelves (63) of the counter-ring (6) and the counter-shelves (71) of the ring (7) prevents any undesired rising of the ring (7), even if a force is discharged on the ring (7) by the tub (3).

It is understood that the removal of the ring (7) and the extraction of the tub (3) through the hole (20) will occur only after rotating the ring (7) in inverse direction with respect to the counter-ring (6), in such a way to eliminate the interference between the shelves (63) and the counter-shelves (71).

The ring (7) is suitable for receiving a circular lid (4) used to cover the tub (3), said circular lid (4) being suitably provided with a handle (40) in preferably off-centered position.

In particular, said lid (4) consists in a disk (4a) provided with a cylindrical body (4b) or "bulb" in concentrically projecting position, suitable for being exactly inserted in the opening of the ring (7) defined by the vertical annular wall (7a) of the ring (7).

The progressive rising travel of the stem (50) - and consequently of the dish (30) of the tub (3) - can be manually enabled by the operator in case of a progressive reduction of the ice cream level.

In such a case, the operator can use a switch associated with said jack (5) to enable the progressive rising travel of the stem (50), as well as the successive complete lowering travel of the stem (50) in order to load a new tub filled with ice cream inside the body (2) of the refrigerated counter of the invention (B).

Alternatively, the jack (5) can be automatically actuated according to a preferred operating principle.

In order to do so, the counter-ring (6) internally supports a proximity sensor (8) in the internal side of the vertical wall (61); said sensor (8) can detect the ice cream contained in the tub (3) through an opening (72) provided in a corresponding position on said first annular edge (7c) of the ring (7).

The sensor (8) of each counter-ring (6) is interfaced with an electronic control unit, together with the jack (5) suitable for actuating the dish (30) of a tub (3).

The electronic control unit is suitable for sending a command to said jack (5) in order to actuate the stem (50) of the dish (30) of the tub (3) when the proximity sensor (8) sends information on the depth of the ice cream level with respect to the opening (3a) of the tub (3).

Preferably, said jack (5) is operated by the electronic control unit for the time necessary or, better said, for a preset rising travel, in order to raise the dish (30) to a height that allows for substantially bringing back the ice cream to the same height as the opening (3a) of the tub (3).

The sensor (8) can be of different types, such as an ultrasound sensor or an infrared sensor, or it may consist in a (traditional or 3D) video camera; in any case, such a sensor (8) is suitable for monitoring the ice cream level in the tub (3) and for detecting the level reduction with respect to the opening (3a) of the tub (3).

Such a level reduction is monitored by measuring the distance of the ice cream level with respect to the opening (3a) of the tub (3), in case of an infrared, ultrasound or 3D sensor.

If the sensor is a traditional video camera, said sensor (8) operates by comparing photograms.

Another type of sensors is represented by sensors that use the TOF (time of fly) technology, which measure the distance of the ice cream level.

In all cases, however, when the distance from the ice cream level detected by the sensor (8) corresponds to the preset distance of the electronic control unit, the electronic control unit will operate the electric motor (5) in order to raise the dish (30) of the tub (3).

Moreover, it must be noted that the jack (5) may be a hydraulic or a pneumatic jack and may be replaced by a different actuator, such as a screw-female screw assembly.

Furthermore, the lid (4) is provided with one or more electric contacts in correspondence of the perimeter edge of the bulb (4b), said one or more electric contacts being suitable for cooperating with corresponding electric contacts provided on the opening of the ring (7); it being provided that all contacts are interfaced with said electronic control unit in order to detect the presence of the lid (4) on the tub (3).

According to the automatic operating principle of the refrigerated counter of the invention (B), the progressive step-by-step rising travel of the dish (30) of each tub (3) is enabled by the electronic control unit only when the electronic control unit has received the confirmation from the electric contacts interfaced between the lid (4) and the ring (7) that the lid (4) is in operating position on the tub (3).

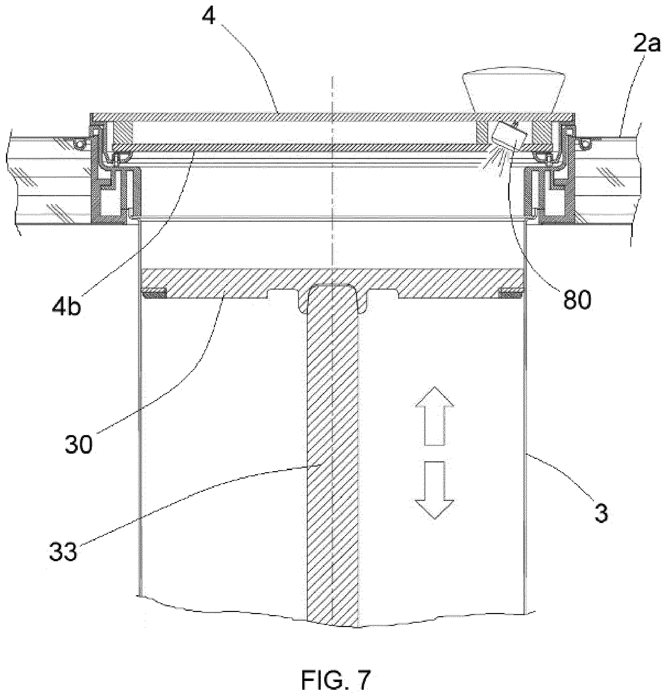

According to an alternative embodiment of the invention, which is show in Fig. 7, the lid (4) is provided with a proximity sensor (80) that is preferably disposed inside the bulb (4b), said proximity sensor (80) being suitable for checking the ice cream level in the tub (3) and for being suitably interfaced with said electronic control unit according to the aforementioned operating principle.

As show in Fig. 7, the bulb (4b) of the lid (4) has a niche for the sensor (80) provided with a lower opening used by the sensor (80) to detect the level of the ice cream contained in the tub (3).

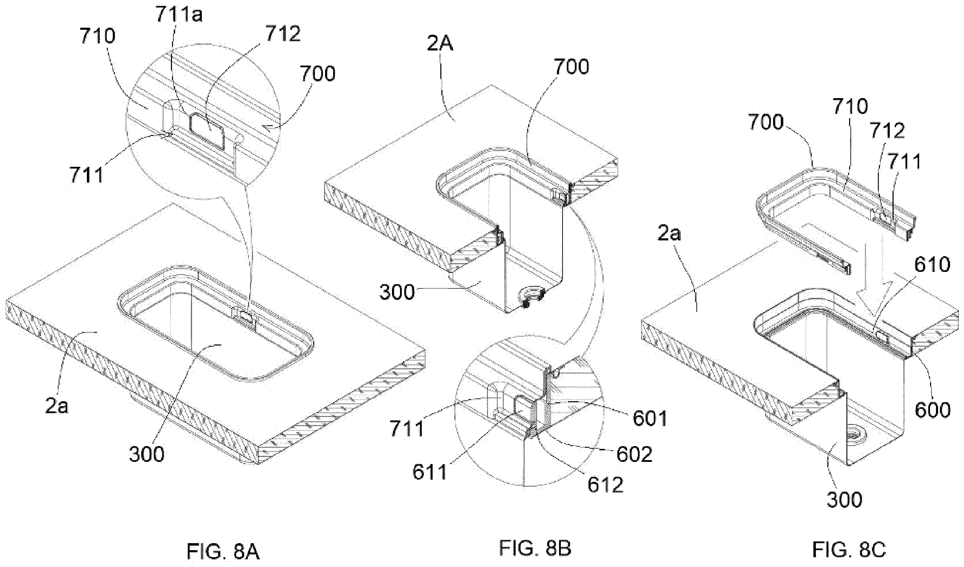

Finally, it must be noted that the refrigerated counter of the invention (B) can also house tubs (300) with a parallelepiped shape, preferably with a rectangular shape (but also with a square shape), without altering its structure and its operation principle, as shown in Figs. 8A, 8B and 8C.

The use of similar parallelepiped tubs (300) requires the presence of rectangular holes on the worktop (2a) of the body (2) of the refrigerated counter of the invention (B).

Most of all, the use of similar parallelepiped tubs (300) requires a different configuration of the means used to hold the tubs (300) on the worktop (2a), which also in this case consists in a fixed counter-ring (600) and in a removable ring (700).

Evidently, such a counter-ring (600) and ring (700) must have a rectangular shape, thus preventing the rotational coupling between the removable ring and the counter-ring fixed to the worktop (2a) that occurs when the refrigerated counter (B) is provided with cylindrical tubs (3).

With reference to the enlarged view of Fig. 8C, wherein the ring (700) is spaced from the counter-ring (600), it must be noted that said counter-ring (600) is provided with an elastically flexible vertical tab (611) on the central line of each longitudinal side (610), said elastically flexible vertical tab (611) being suitable for being disposed closer to the longitudinal side (610) of the counter-ring (600) under pressure, and also for instantaneously recovering a forward position with respect to said longitudinal side (610) when it is no longer exposed to said pressure.

According to the preferred embodiment of Fig. 8C, when seen in a sectional view, also the counter-ring (600) has a substantially L-shaped profile that comprises a vertical wall (601) with a horizontal wall (602) disposed in projecting position and directed towards the center of said counter-ring (600).

In view of the above, the tab (610) vertically projects from the end of said horizontal wall (602) of the counter-ring (600), being connected to said end by means of a low-thickness horizontal portion (611) that acts as a hinge.

Because of its low thickness, said horizontal portion (611) that connects the tab (610) and the horizontal wall (602) of the counter-ring (600) can act as an elastic return element for the tab (610), which is brought back to its initial vertical position when it is no longer exposed to said pressure.

With reference to the enlarged view of Fig. 8A, the ring (700) is provided with a niche (711) in the central line of each longitudinal side (710), said niche (711) being provided on its horizontal bottom wall (711a) with an opening (712) that exactly has the same shape as the flexible tab (611) of the counter-ring (600).

Moreover, it must be noted that said ring (700) is suitable for being operatively disposed on the counter-ring (600) after the tub (300) is introduced in the hole of the worktop (2a).

More precisely, the ring (700) is inserted from up downwards on the counter-ring (600) in such a way that the back side of said horizontal bottom wall (711a) of each niche (711) can interfere against the upper edge of the tab (611) of the counter-ring (600).

Because of such an interference, the tab (611) is inclined towards the longitudinal side (610) of the counter-ring (600), without hindering the additional descending movement of the ring (700).

When said ring (700) is completely inserted in the counter-ring (600), each one of the openings (712) provided on the bottom of said two niches (711) of the ring (700) is exactly disposed in front of the flexible tab (611) of the ring (600).

Now, because of the action of the elastic return means (612), the two tabs (611) of the ring (600) can recover the initial vertical position, being exactly inserted in the openings (712) of the ring (700).

Because of such an insertion of the tabs (611) of the counter-ring (600) inside the openings (712) of the ring (700), the ring (700) and the counter-ring (600) are joined, preventing them from being accidentally detached.

In order to separate the ring (700) from the counter-ring (600) again, a manual pressure must be exerted on the two tabs (611) of the counter-ring (600), in such a way to push them out of the openings (712) provided on the ring (700).

## Claims

1. Refrigerated counter for ice cream tubs, comprising:
- a base (1) with a refrigeration unit
- a body (2) that houses a metal refrigerated compartment, said body (2) being closed on top by the worktop (2a) of said refrigerated counter (B) and on the bottom by a horizontal bottom wall (2b), which are suitably joined by insulated vertical walls; wherein said worktop (2a) has a plurality of holes (20) ending in said refrigerated compartment contained in the body (2)
- a plurality of tubs (3, 300) suitable for being exactly inserted in one of said holes (20) provided in the body (2); wherein each tub (3, 300) has an upper opening (3a) and a bottom wall (3b);
- a plurality of lids (4), one for each tub (3, 300), suitable for closing said opening (3a) of the tubs (3, 300), substantially at the height of said worktop (2a) of the body (2);
refrigerated counter (B) **characterized in that**:
- each tub (3, 300) has a circular hole (3c) in the center of its bottom wall (3b) and houses a dish (30) that slides vertically, entirely occupying the transverse section of the tub (3, 300), and provided with an annular collar (30a) in lower central position
- said bottom wall (2b) of the body (2) has a plurality of vertical through holes (51) with bushings (52), one for each tub (3) contained in said body (2); wherein each hole (51) is suitable for being perfectly aligned with said hole (3c) provided on the bottom wall (3b) of the tub (3, 300) when said tub (3, 300) is inserted in the body (2)
- said base (1) houses a plurality of actuators (5), one for each tub (3, 300) housed in the body (2); wherein each actuator (5) actuates a vertical stem (50) provided on top with a tip (50a) and suitable for exactly crossing one of said through holes (51) of the bottom wall (2b) of the body (2), with possibility of alternately sliding, and for being inserted in said hole (3c) provided on the bottom wall (3b) of a tub (3, 300), being firmly inserted with the tip (50a) inside said collar (3a) provided in the dish (30) of said tub (3, 300); wherein said stem (50) is suitable for alternately going from a retracted position, wherein it maintains said dish (30) of the tub (3, 300) in its lower end-of-travel position, proximal to said bottom wall (3b) of the tub (3, 300), to an extended position, wherein it brings said dish (30) to the upper end-of-travel position, proximal to the opening (3a) of the tub (3, 300);
- said counter (1) is provided with means to actuate and stop each actuator (5).

2. The refrigerated counter of claim 1, wherein said tip (50a) of the stem (50) of each actuator (5) is inserted in the lower end (33b) of a stem (33) having the same profile and section as the stem (50); wherein the upper end (33a) of said stem (33) is suitable for being slidingly inserted into said hole (3c) provided on the bottom wall (3b) of a tub (3, 300), engaging with said collar (30a) of the dish (30) of said tub (3, 300).

3. The refrigerated counter of one of the preceding claims, wherein said annular collar (30a) provided under the dish (30) of each tub (3, 300) is suitable for being exactly inserted, with the interposition of a bushing (31), in said hole (3c) provided in the center of the bottom wall (3b) of the tub (3, 300) when the dish (30) is in its lower end-of-travel position.

4. The refrigerated counter of one of the preceding claims, wherein each tub (3, 300) is provided all around its opening (3) with a horizontal outward edge (3a') that supports an upward annular edge (3a") in ending position.

5. The refrigerated counter of one of the preceding claims, wherein said actuators (5) are manually operated.

6. The refrigerated counter of one of claims 1 to 4, wherein an electronic control unit is interfaced with said actuators (5), and with sensors (8, 800) disposed in the vicinity of the opening (3a) of each tub (3, 300); wherein said sensors (8, 800) are suitable for detecting the ice cream contained in the tub (3, 300) in order to measure the distance between the ice cream level and the opening (3a) of the tub (3) in real time in such a way that, after being informed that the distance measured by said sensors (8, 800) coincides with the preset distance, said electronic control unit enables the actuation of the actuator (5) for the time necessary for the dish (30) of the tub (3, 300) to rise towards the upper opening (3a) of the tub (3, 300) until the remaining ice cream is substantially flush with said opening (3a).

7. The refrigerated counter of one of the preceding claims, wherein each tub (3, 300) cooperates with stop means (6, 7 / 600, 700) suitable for ensuring that, after being inserted in the hole (20) of the body (2), said tub (3, 300) is firmly fixed on the worktop (2a) of the body (2) at the height of its opening (3a).

8. The refrigerated counter of claim 7, wherein said stop means of the tubs (3, 300) consist in a counter-ring (6, 600) fixed in each hole (20) of said tubs (3, 300) and a ring (7, 700) suitable for being removably coupled with the counter-ring (6, 600)

9. The refrigerated counter of claim 8, wherein each tub (3) has a cylindrical shape and said stop means on the worktop (2a) of the body (2) consist in:
- a circular counter-ring (6) suitable for being firmly inserted in the hole (20) of a tub (3), wherein said counter-ring (6) has a basically L-shaped cross-section comprising a vertical annular wall (61) and a horizontal wall (62) that protrudes from the base of said vertical wall (61) towards the center of said counter-ring (6); wherein said vertical wall (61) is frontally provided with three horizontal shelves (63) that are regularly spaced by 120°;
- a circular ring (7) with a substantially S-shaped cross-section, comprising:
a vertical annular wall (7a), a shoulder (7b) protruding towards the interior of the ring (7) from the base of said vertical annular wall (7a), said shoulder (7b) being suitable for supporting a first annular edge (7c) with downward direction in ending position; wherein the shoulder (7b) supports a second annular edge (7d) in lower position, said second annular edge (7d) being concentric and close to said first annular edge (7c) of the ring (7), and a third annular edge (7e) in external position, having a lower height than the second edge (7d); wherein said third edge (7e) supports three counter-shelves (71) that are regularly spaced by 120° on the side opposite to the second edge (7d);
wherein said ring (7) is suitable for being inserted in said counter-ring (6) so that:
• its second annular edge (7d) is engaged against the end of said horizontal wing (62) of the counter-ring (6)
• its first annular edge (7c) is engaged against the horizontal edge (3a') that surrounds the tub (3)
• said counter-shelves (71) of the ring (7) are disposed immediately under the shelves (63) of the counter-ring (6), in such a way that a rotation of the ring (7) relative to the fixed counter-ring (6) permits the insertion of said counter-shelves (71) under the shelves (63).

10. The refrigerated counter of claim 8, wherein each tub (300) has a parallelepiped shape with a rectangular base and wherein said stop means on the worktop (2a) of the body (2) consist in:
- a rectangular counter-ring (600) suitable for being firmly fixed in said hole (20) for a tub (300), and provided with a flexible tab (611) on the central line of each longitudinal side (610), said flexible tab (611) being subject to the action of an elastic return means (612) and being therefore suitable for being disposed closer to the longitudinal side (610) under pressure, and for instantaneously recovering its initial position when said pressure is no longer exerted;
- a rectangular ring (700) suitable for being exactly inserted in said counter-ring (600) and also provided with a niche (711) in the central line of each longitudinal side (710), said niche (711) being provided in its vertical bottom wall (711a) with an opening (712) suitable for exactly receiving said tab (611) provided in the counter-ring (600); wherein, during the initial insertion of said ring (700) in the counter-ring (600), said bottom wall (711a) of the niche (711) is suitable for interfering with the tab (611) in such a way to dispose said tab (611) closer to the longitudinal side (610); wherein said tab (611) is suitable for recovering its initial position and for being inserted in said opening (712) of the ring (700) when the insertion of the ring (700) in the counter-ring (600) is completed, and said openings (712) of the ring (700) are brought to a position that is exactly opposite to the tabs (611) in the counter-ring (600).

11. The refrigerated counter of one of the preceding claims, wherein said lid (4) has a bulb (4b) suitable for being inserted in the opening (3a) of a tub (3, 300).

12. The refrigerated counter of one of the preceding claims, wherein each of said sensors (8) is mounted in the counter-ring (6, 600) of the tubs (3, 300) and is suitable for detecting the ice cream level in said tub (3, 300) through an opening (72) obtained in useful position on said first annular edge (7c) of the ring (7).

13. The refrigerated counter of one of the preceding claims, wherein each sensor (80) is inserted in a niche obtained in said bulb (8c) of the lid (4).

14. The refrigerated counter of one of the preceding claims, wherein said electronic control unit is additionally interfaced with first electric contacts that are provided in the opening (3a) of each tub (300) and cooperate with second electric contacts provided in the vertical perimeter edge of said bulb (4b) of the lid (4), so that the electronic unit enables the actuation of each actuator (5) only when it receives the information on the presence of the lid (4) in the opening (3a) of the tub from said first and second electric contacts.
